# EUROPEAN PATENT SPECIFICATION

(11) **EP 4 529 814 B1**
(45) Date of publication and mention of the grant of the patent: **08.04.2026**
(21) Application number: 24196916.1
(22) Date of filing: 28.08.2024
(51) Int. Cl.: A47J 31/36, A47J 31/44, A47J 31/46

(54) **INFUSION ASSEMBLY FOR PREPARING INFUSED BEVERAGES**
INFUSIONSGERÄT ZUR ZUBEREITUNG VON INFUSIONSGETRÄNKEN
ENSEMBLE D'INFUSION POUR LA PRÉPARATION DE BOISSONS INFUSÉES

(30) Priority: 26.09.2023 IT 202300019785
(43) Date of publication of application: 02.04.2025
(73) Proprietor: Capitani S.r.l., 22043 Solbiate con Cagno (CO) (IT)
(72) Inventor: CAPITANI, Gionata, Albiolo (CO) (IT)
(74) Representative: Fabiano, Piero

(56) References cited:
- EP-B1- 3 111 812
- FR-A- 1 367 182
- US-B2- 8 826 804
- US-B2- 9 629 497

## Description

### Field of the invention

The present invention concerns the field of machines for making infused beverages such as coffee, tea, herbal teas, chocolate, etc. starting from a capsule or pod containing an aromatic substance and the respective infusion assemblies.

In particular, the present invention concerns an infusion assembly for machines for making infused beverages.

### Known art

The known infusion devices of coffee machines generally comprise a first infusing element usually named female infuser, shaped like a cup and comprising a cavity apt to house an infusion capsule and/or pod containing an aromatic substance, and a second element usually named male infuser, apt to close the aforesaid cavity so that to define, together with the first infusing element, an infusion chamber.

The capsule, containing the aromatic essence, is placed or transported into the infusion chamber so that the extraction of the aromatic essence occurs with the injection of pressurized hot water into the infusion capsule and/or pod.

The infusion chamber communicates with at least one outlet duct for the outflow of the infused beverage, ending with an outlet nozzle or hopper for the outflow of the beverage.

In particular, some delivery assemblies for machines for making pressurized beverages, such as for example coffee, comprise valve members for controlling the pressure inside an infusion chamber.

Such members are movable between a closed configuration, below a predefined pressure value, adapted for preventing the flow of the infused beverage through an outlet duct, and an open configuration, above a predefined pressure value, in which they allow the delivery of the infused beverage through the outlet duct. Delivery assemblies of the aforesaid type are for example known from EP3139799 and EP3111812.

EP3139799 describes a delivery assembly for machines for making pressurized beverages comprising a valve member. The valve member comprises a first body extending along a vertical axis and having, along such axis, a through hole along which a beverage is supplied from a percolation chamber arranged above. The aforesaid body stops the flow of the beverage under the thrust of a spring between the hole and the inside of the body until the beverage reaches a given pressure in the hole.

The Applicant has however observed that the valve members of the known art can only be adjusted or cleaned of any encrustations and adhesions by being disassembled.

The Applicant has thus addressed the problem of making a machine and, in particular, an infusion assembly for machines for preparing infused beverages, provided with a valve member that can also be regulated from the outside and can remove any encrustations or adherences of its parts, also from the outside.

A further problem addressed by the Applicant is that of making an infusion assembly for machines for preparing infused beverages provided with a valve member which is simple and intuitive to remove and clean and which reduces the formation of dirt in its parts, in particular in the delivery duct.

### Summary of the invention

Thus, the invention concerns an infusion assembly, for example for coffee machines of the type operating with pods or capsules containing aromatic essences, comprising:
- an infusion chamber delimited by a first cup-shaped infusing element provided with a cavity for accommodating an infusion capsule or pod therein and a second infusing element which cooperates with the first infusing element so as to define, when coupled therewith, said infusion chamber;
- a valve member combined with said infusion chamber, for controlling the delivery of the infused beverage;
- said valve member comprising:
- at least one passage duct for the passage of the infused beverage from the infusion chamber, comprising a first portion in fluidic communication with said infusion chamber and a second portion in communication with a delivering hopper configured for delivering the infused beverage into an outer container;
- a plug movable at least between:
   c) a forward closed position, in which it prevents the outflow of the infused beverage from the infusion chamber, below a predefined pressure value; and
   d) a rearward open position, in which it allows the passage of the beverage from the second portion to the delivering hopper, above the predefined pressure value;
- said passage duct comprising at least one side window arranged to allow the infused beverage to flow out from said duct to said hopper, whenever said plug is in the rearward position;
said movable plug comprises:
- at least one closing element configured for plugging the at least two side windows, thus preventing the passage of the infused beverage coming from the infusion chamber;
- at least one elastic element adapted for exerting an elastic force onto said at least one closing element;
- at least one supporting element supporting said elastic element inside said passage channel, said supporting element being engaged in a housing seat,
- said supporting element being configured for compressing or expanding said at least one elastic element;
- said supporting element being controlled by an outer lever for being operated from the outside, said outer lever is functionally connected at one end to said supporting element so that the rotation of said outer lever about its axis of extension results in rotation of the supporting element with respect to its seat.

This way, it is possible to adjust the infusion and creaminess of the beverage being delivered by the machine from the outside, also for example depending on the different coffee blends, by adjusting the closing force of the closing element.

The outer lever further allows to clean or remove encrustations or remains which can build up on the closing element and which can cause a reduction in the creaminess of the infused beverage.

In some embodiments, the infusion assembly can have at least one of the preferred characteristics described hereunder.

"Longitudinal" direction means a direction generally oriented according to the translation direction of at least one of the two infusing elements, first and second respectively, for switching from the closed position to the open position and vice-versa.

"Cross" direction means a direction generally orthogonal to the extension direction of the portion, element or duct to which reference is made.

The expression "upstream" or "downstream" is respectively evaluated with respect to the direction of the flow being delivered from the infusion chamber.

"Axis," in particular of extension, means a line, not necessarily straight, defined by a median position or function with respect to a figure or body.

The housing seat and said supporting element comprise a thread.

Advantageously, the outer lever comprises a flexible body extending along a main axis of extension.

Advantageously, the outer lever is removably connected to the supporting element.

Conveniently, the outer lever comprises a minimum extension along its main axis of extension equal to at least 2 cm.

In section, the outer lever can preferably be inscribed in a circumference of maximum radius equal to 0.3 cm.

Advantageously, the outer lever is made of metal material. Alternatively, the outer lever can be made of plastic and/or rubber.

Conveniently, the passage duct comprises at least two side windows arranged to allow the infused beverage to flow out from the duct to said hopper, when said plug is in the rearward position.

Further characteristics and advantages of the invention will become clearer in the detailed description of some preferred, but not exclusive, embodiments of an infusion assembly for preparing infused beverages according to the present invention.

### Brief description of the drawings

Such description will be set forth hereunder with reference to the accompanying drawings provided by way of example only and thus not limiting, in which:

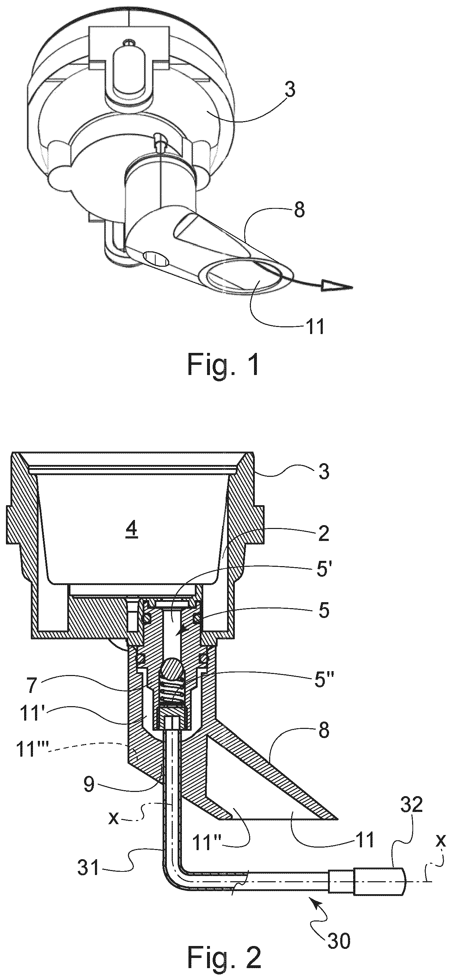

- figure 1 shows a schematic perspective view of a portion of an infusion assembly comprising a valve member according to the present invention;
- figure 2 shows a schematic sectional view of the portion of figure 1 of the infusion assembly according to the present invention;
- figure 3 shows an exploded schematic view of the portion of figure 1 of the infusion assembly according to the present invention; and

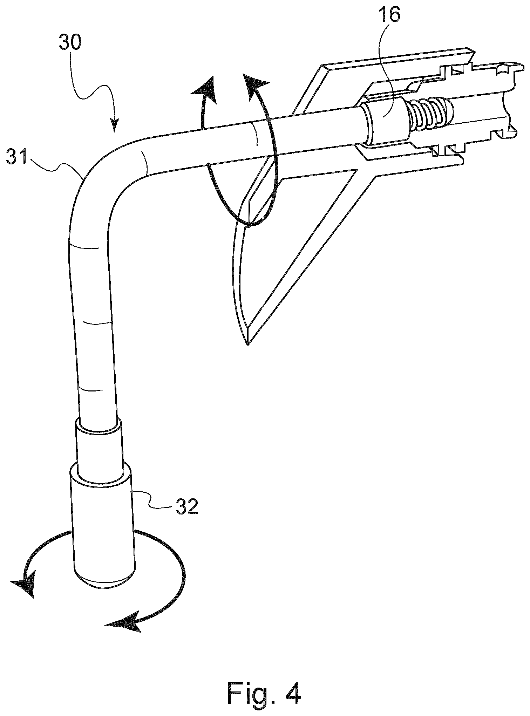

- figure 4 shows a schematic perspective view of the portion of figure 1 of the infusion assembly according to the present invention, showing the outer lever rotating.

### Detailed description of embodiments of the invention

With reference to the figures, an infusion assembly for a machine for preparing an infused beverage by means of a capsule or pod containing an aromatic substance according to the present invention is shown.

Although not shown in the figures in its entirety, the machine precisely comprises, in a known way, an infusion assembly 1 and an outer shell configured for containing at least the infusion assembly 1.

The infusion assembly 1 comprises a first cup-shaped infusing element 3 provided with a cavity 4 for accommodating an infusion capsule or infusion pod therein and a second infusing element which cooperates with the first infusing element 3 so as to define, when coupled therewith, an infusion chamber 2.

The first infusing element 3 and the second infusing element are supported by a supporting frame. For example, said frame has a parallelepiped box-shaped structure substantially extending along a main longitudinal axis X-X which can be horizontal in a preferred embodiment.

The supporting frame 2 comprises two side plates opposite one another and parallel to the main longitudinal axis X-X. The first infusing element 3 and the second infusing element are placed between and supported by said side plates.

At least one of said first infusing element 3 and said second infusing element is a movable infuser. Said movable infuser is translatable with respect to the other along a translation axis coincident with or parallel to the main longitudinal axis X-X of the frame 2. The movable infuser, which in the preferred embodiment example illustrated is the second infusing element, is movable between a rearward open position and a forward closed position so as to form the infusion chamber 2.

In the closed position, the second infusing element is alongside and adjacent to the first infusing element 3 so that to close its cavity 4 which houses the infusion capsule or pod, thus achieving a hermetic seal.

For better clarity of exposition and according to the accompanying figures, reference will be made to the second infusing element as the movable infusing element in the description hereunder, but it will be clear to the technician of the field that the teaching provided by the present invention can also easily be applied whenever the movable infusing element is the first infusing element 3.

According to a preferred embodiment, at least one duct for the water inflow into the infusion chamber extends from the second infusing element, while, as will be described more in detail hereunder, at least one outlet duct for the outflow of an infused beverage to a cup extends from the first infusing element 3.

In the embodiment shown in the figures, outside of the shell there is an actuating lever configured for being operated by a user and for actuating the translation of the second infusing element from the closed position to the position of maximum opening.

Alternatively, the translation of the second infusing element from the closed position to the position of maximum opening could be actuated by an electric motor driven by a control unit.

According to the present invention, the first infusing element 3 is in fluidic communication with a delivering hopper 8 in turn comprising a delivery duct 11 which allows to deliver the infused beverage coming from the infusion chamber 2 into an outer container, such as for example a coffee cup.

The infusion assembly 1 further comprises a valve member 7, combined with the infusion chamber 2, with the delivering hopper 8 and with its delivery duct 11, for controlling the delivery of the infused beverage. Such controlling valve member 7 comprises a passage duct 5 for the infused beverage coming from the infusion chamber 2 and a movable plug 13.

The passage duct 5 is in fluidic communication with the infusion chamber 2 and with the delivery duct 11 of the delivering hopper 8. According to the present invention, the passage duct 5 has a first portion 5' in fluidic communication with said infusion chamber 2 and a second portion 5" in communication with the delivery duct of the delivering hopper 8 through at least one side window 12, preferably two.

The plug 13 is movable at least between:
c) a forward closed position, in which it prevents the outflow of the infused beverage from the infusion 2, below a predefined pressure value; and
d) a rearward open position, in which it allows the passage from the infusion chamber 2 to the delivery duct 11 through the aforesaid at least one side window 12.

The movable plug 13 is removably fastened inside the duct 5. In particular, an upper portion of the movable plug 13 is removably fastened to a seat provided at the bottom in the infusion chamber 2.

For its fastening, the mobile plug has a thread configured for being engaged in a corresponding thread better described hereunder.

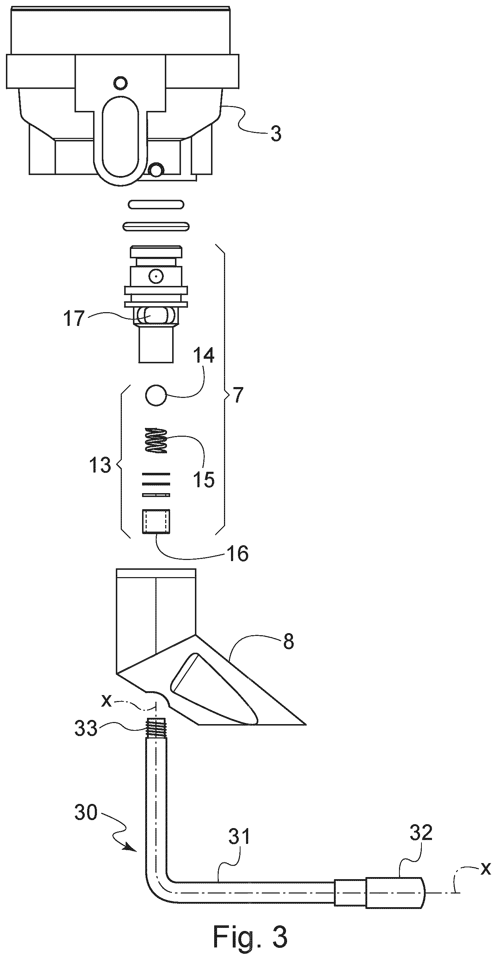

Two gaskets or O-rings can further be provided for the sealing of the movable plug 13 with respect to the seat of the infusion chamber 2 and/or the hopper 8. According to the present invention and as shown in figure 3, the movable plug 13 comprises:
- at least one closing element 14 configured for plugging the at least two side windows 12, thus preventing the passage of the infused beverage coming from the infusion chamber 2;
- at least one elastic element 15 adapted for exerting an elastic force onto said at least one closing element 14;
- at least one supporting element 16 supporting the elastic element 15 inside the passage channel 5.

In the embodiment shown in the figures, the elastic element 15 is an helical spring shaped for exerting a thrust onto the closing element 14 to counter the pressure of the infusion chamber 2, so that to cause it to occlude the side windows 12.

Such way ensures, in a constructionally simple way, that the elastic return means push the closing element 14 into abutment against the valve seat, thus closing the side windows 12 and thus interrupting the fluidic communication between the infusion chamber 2 and the delivery duct 11, as soon as the pressure in the infusion chamber 2 drops below the predefined value.

When the pressure exceeds the predefined pressure value, for example during the beverage delivery step, the plug instead is placed in the rearward open position so that to allow the fluidic connection, and thus the flow of the infused beverage, between the infusion chamber 2 and the delivery duct 11. Still in other words, the best organoleptic performance of the beverage is achieved at predetermined pressure values within a narrow range of values, thus the valve member 7 allows to start delivering the beverage only after such pressure has been reached and always in a highly reproducible way.

Still with reference to the embodiment shown in the figures, the closing element 14 is a sphere.

Alternatively, the closing element could be of another shape anyhow such as to occlude the side windows 14 when the plug is in its forward position.

The supporting element 16 is shaped for being constrained to the inside of the duct 5 and for acting as a countering element for the elastic element.

Preferably, the supporting element 16 is removably mounted in the passage channel 5. For this purpose, the supporting element 16 comprises a thread shaped for being coupled to a corresponding thread formed inside the duct 5, in particular inside a portion of the duct 5 which acts as a housing seat.

According to the present invention, the supporting element 16 can be combined with an outer lever 30 operable from the outside.

The actuation of the lever in one direction or in the opposite direction moves the elastic element 15 and the closing element 14 inside the duct 5 in one direction or in the opposite direction, thus breaking-up and removing possible encrustations possibly formed between the elastic element 15 and the duct 5.

The outer lever 30 comprises a flexible body 31 extending along a main axis of extension X-X.

The flexible body 31 is functionally connected at one end to the supporting element 16.

The coupling between the supporting element 16 and the end of the outer lever 30 is preferably an axial coupling, in other words, it occurs in direction of the main axis of extension X-X of the flexible body 31, so that the rotation of the outer lever 30, and in particular of its end, in contact with the supporting element 16, about its axis of extension results in the rotation of the supporting element 16 with respect to its housing seat.

This way, the rotation of the supporting element 16 with respect to its housing seat compresses or expands the elastic element 15 which in turn modifies the pressure necessary for opening or plugging the aforesaid at least one side window 12 via the closing element 14.

This way, it is also possible to eliminate possible residues of dirt inside the duct 5, which residues are responsible for the locking or adhesions of the elastic element and/or the closing element at the walls inside the duct 5.

The lever 30 preferably comprises a minimum extension along its axis of extension equal to at least 5 cm.

The lever 30 preferably has a maximum extension along its axis of extension equal to at least 1 cm, preferably of less than 6 cm.

The outer lever 30 has a section which can be inscribed in a circumference of maximum radius equal to 2 cm so as to allow easy manipulation.

The body 31 of the lever 30 is made of metal material.

The body 31 of the outer lever 30 is preferably made of strands of metal wires.

Alternatively, the outer lever can be made of plastic and/or rubber.

The outer lever 30 can be made in one piece with the supporting element 16 or can be made removably, in this latter case, there are removable fastening means 33 between the outer lever 30 and the supporting element 16.

By way of an example, corresponding threads between the outer lever end 30 and the support element 16 can be provided as removable fastening means 33.

In the embodiment shown in the figures, at one end, generally the one axially opposite the one engaged with the supporting element 16, the flexible body 31 has a knob 32 configured for being gripped by the user.

The knob 32, arranged axially about the end of the flexible body 31, can be made of different materials and shapes.

As previously mentioned, the valve member 7 has at least one side window 12, according to the present invention, two, to allow the infused beverage to flow out from said duct 5 to the hopper 8, when said plug is in the rearward position.

The side windows are arranged on the side surface of the passage duct 5 and put the latter in fluid communication with the delivery duct 11 of the delivering hopper 8.

According to the present invention, there are at least two side windows 12 but there could be a greater or smaller number of them without thereby departing from the protection scope of the present invention as defined by the appended claims.

Still with reference to the embodiment shown in the figures, it is pointed out that the side windows have an area of between 2 and 32 mm².

Each side window 12 has at least one anti-residue slide 17 configured for facilitating the outflow of the infused beverage and preventing part of the infused beverage from sticking and staying on the edges of the side window itself while being delivered.

Each slide is configured for sliding away from the central axis of the passage duct 5.

In the embodiment shown in the figures, the delivering hopper 8 and its delivery duct extend according to a direction forming a broken line, thus comprising a first vertical segment 11', a second segment 11" inclined with respect to the first segment 11' and a connecting segment 11‴ interposed between the first segment 11' and the second segment 11".

The first segment 11' of the delivery duct contains the valve member 7 and is in fluid communication with the side windows 12.

As in the embodiment shown in the figures, a divider 9 arranged in the delivery duct 11 of the delivering hopper 8 can be present downstream of the first segment 11'.

The divider 9 is configured for splitting the flow of infused beverage coming from the infusion chamber 2 into two flows.

In particular, the divider 9 is arranged at the connecting segment 11‴ of the delivery duct 11.

The divider 9 is thus arranged in the delivery duct 11 of the hopper downstream of the valve element 7.

In the embodiment shown in the figures, the divider 9 extends transversely inside the delivery duct 11, thus forming a bridge between two diametrically opposite portions and splitting the duct 11 into two.

The divider 9 does not extend throughout the entire duct 11 and, in particular, at least one end portion of the delivery duct 11 is not affected by the divider, thus allowing the two split flows of the infused beverage to be joined again into a single flow before being delivered.

In the embodiment shown in the figures, the divider 9 extends in an extension direction of the delivery duct 11 for at least 5% of the extension dimension of the delivery duct 11 in the direction of its extension.

The divider 9 is designed for splitting the infused beverage coming from the infusion chamber into two flows, but it should not excessively reduce the inner section of the duct 11, for such purpose, the divider 9 has a thickness of less than 5 mm, preferably of less than 4 mm.

When being delivered, the infused beverage flowing from the infusion chamber 2 to the delivery duct 11 crosses a series of ducts of variable sections, thus considerably reducing the formation of air bubbles.

The infused beverage coming from the infusion chamber 2 enters the first portion 5' of the passage duct 5 at a first speed. When the beverage flows in the delivery duct 11, the section of the duct increases and the speed of the flow decreases. Finally, at the divider 9, the passage section decreases drastically, by about half for each section of the duct made by the divider with the inside of the delivery duct 11, and the speed increases notably, thus favoring the reduction of air bubbles in the flow of the beverage.

Finally, before being delivered, the inner section of the delivery duct 11 increases notably. It practically doubles, the last segment 11" of the delivery duct 11 no longer being affected by the divider 9, thus reducing the speed of the flow of the infused beverage which is delivered compact, creamy, devoid of significant bubbles and without spurts.

According to an embodiment not shown and not encompassed within the scope of the present invention, the lever acts directly onto the closing element 14.

Several modifications can be made to the embodiments described in detail, all anyhow remaining within the protection scope of the invention, as defined by the following claims.

## Claims

1. Infusion assembly (1), for example for coffee machines of the type operating with pods or capsules containing aromatic essences, comprising:
- an infusion chamber (2) delimited by a first cup-shaped infusing element (3) provided with a cavity (4) for accommodating an infusion capsule or pod therein and a second infusing element which cooperates with the first infusing element so as to define, when coupled therewith, said infusion chamber (2);
- a valve member (7) combined with said infusion chamber, for controlling the delivery of the infused beverage;
- said valve member (7) comprising:
- at least one passage duct (5) for the passage of the infused beverage from the infusion chamber (2), comprising a first portion (5') in fluidic communication with said infusion chamber (2) and a second portion (5") in communication with a delivering hopper (8) configured for delivering the infused beverage into an outer container;
- a plug (13) movable at least between:
c) a forward closed position, in which it prevents the outflow of the infused beverage from the infusion chamber (2), below a predefined pressure value; and
d) a rearward open position, in which it allows the passage of the beverage from the second portion (5") to the delivering hopper (8), above the predefined pressure value;
- said passage duct (5) comprising at least one side window (12) arranged to allow the infused beverage to flow out from said duct (5) to said hopper, whenever said plug (13) is in the rearward position;
wherein said movable plug (13) comprises:
- at least one closing element (14) configured for plugging the at least two side windows (12), thus preventing the passage of the infused beverage coming from the infusion chamber (2);
- at least one elastic element (15) adapted for exerting an elastic force onto said at least one closing element (14);
- at least one supporting element (16) supporting said elastic element (15) inside said passage channel (5), said supporting element (16) being engaged in a housing seat,
- said supporting element (16) being configured for compressing or expanding said at least one elastic element;
- said supporting element (16) being controlled by an outer lever for being operated from the outside;
- said outer lever (30) is functionally connected at one end to said supporting element (16) so that the rotation of said outer lever (30) about its axis of extension results in rotation of the supporting element (16) with respect to its housing seat.

2. Infusion assembly (1) according to claim 1, **characterized in that** said housing seat and said supporting element (16) comprising a thread.

3. Infusion assembly (1) according to claim 1, **characterized in that** said outer lever (30) comprises a flexible body (31) extending along a main axis of extension.

4. Infusion assembly (1) according to claim 1, **characterized in that** said outer lever (30) is removably connected to said supporting element (16), when said outer lever (30) is controlling the support element (16).

5. Infusion assembly (1) according to claim 1, **characterized in that** said outer lever (30) comprises a minimum extension along its main axis of extension equal to at least 2 cm.

6. Infusion assembly (1) according to claim 1, **characterized in that**, in section, said outer lever (30) can be inscribed in a circumference of maximum radius equal to 0.3 cm.

7. Infusion assembly (1) according to claim 1, **characterized in that** said outer lever (30) is made of metal material.

8. Infusion assembly (1) according to claim 1, **characterized in that** said passage duct (5) comprises at least two side windows arranged to allow the infused beverage to flow out from said duct (5) to said hopper, whenever said plug is in the rearward position.

## Patentansprüche

1. Aufgussanordnung (1), beispielsweise für Kaffeemaschinen vom Typ, der mit aromatische Essenzen enthaltenden Pads oder Kapseln betrieben wird, umfassend:
- eine Aufgusskammer (2), begrenzt durch ein erstes becherförmiges, mit einem Hohlraum (4) zur Aufnahme einer Aufgusskapsel oder eines Aufgusspads versehenes Aufgusselement (3) und ein zweites Aufgusselement, das mit dem ersten Aufgusselement derart zusammenwirkt, dass es, wenn es mit diesem verbunden ist, die Aufgusskammer (2) definiert;
- ein der Aufgusskammer zugeordnetes Ventilelement (7) zur Steuerung der Abgabe des aufgegossenen Getränks;
- wobei das Ventilelement (7) umfasst:
- zumindest eine Durchgangsleitung (5) für den Durchgang des aufgegossenen Getränks aus der Aufgusskammer (2), die einen ersten Abschnitt (5') in Fluidverbindung mit der Aufgusskammer (2) und einen zweiten Abschnitt (5") in Verbindung mit einem zum Abgeben des aufgegossenen Getränks in einen Außenbehälter ausgebildeten Ausgabetrichter (8) umfasst;
- ein Verschlussorgan (13), das beweglich ist zwischen zumindest:
c) einer vorgerückten Schließposition, in der es den Ausfluss des aufgegossenen Getränks aus der Aufgusskammer (2) unterhalb eines vorbestimmten Druckwertes verhindert; und
d) einer zurückgestellten Öffnungsposition, in der es den Durchfluss des Getränks vom zweiten Abschnitt (5") zum Ausgabetrichter (8) oberhalb des vorbestimmten Druckwerts ermöglicht;
- wobei die Durchgangsleitung (5) zumindest eine seitliche Aussparung (12) aufweist, die derart angeordnet ist, dass sie dem aufgegossenen Getränk erlaubt, aus der besagten Leitung (5) in den Trichter zu fließen, wenn sich das Verschlussorgan (13) in der zurückgestellten Position befindet;
wobei das bewegliche Verschlussorgan (13) umfasst:
- zumindest ein Verschlusselement (14), das zum Verschließen der zumindest zwei seitlichen Aussparungen (12) konfiguriert ist, um den Durchfluss des aus der Aufgusskammer (2) kommenden aufgegossenen Getränks zu verhindern;
- zumindest ein elastisches Element (15), das zur Ausübung einer elastischen Kraft auf das zumindest eine Verschlusselement (14) geeignet ist;
- zumindest ein Tragelement (16), das das elastische Element (15) innerhalb der Durchgangsleitung (5) trägt, wobei das Tragelement (16) in einen Gehäusesitz eingreift,
- wobei das Tragelement (16) zum Zusammendrücken oder Expandieren des mindestens einen elastischen Elements ausgebildet ist;
- wobei das Tragelement (16) durch einen Außenhebel zu seiner Betätigung von außen gesteuert wird;
- wobei der Außenhebel (30) an einem Ende funktional mit dem Tragelement (16) verbunden ist, so dass die Drehung des Außenhebels (30) um seine Erstreckungsachse zu einer Drehung des Tragelements (16) gegenüber seinem Gehäusesitz führt.

2. Aufgussanordnung (1) nach Anspruch 1, **dadurch gekennzeichnet, dass** der Gehäusesitz und das Tragelement (16) ein Gewinde aufweisen.

3. Aufgussanordnung (1) nach Anspruch 1, **dadurch gekennzeichnet, dass** der Außenhebel (30) einen flexiblen Körper (31) umfasst, der sich entlang einer Haupterstreckungsachse erstreckt.

4. Aufgussanordnung (1) nach Anspruch 1, **dadurch gekennzeichnet, dass** der Außenhebel (30) lösbar mit dem Tragelement (16) verbunden ist, wenn der Außenhebel (30) das Tragelement (16) steuert.

5. Aufgussanordnung (1) nach Anspruch 1, **dadurch gekennzeichnet, dass** der Außenhebel (30) eine minimale Erstreckung entlang seiner Haupterstreckungsachse umfasst, die zumindest 2 cm gleich ist.

6. Aufgussanordnung (1) nach Anspruch 1, **dadurch gekennzeichnet, dass** der Außenhebel (30) im Querschnitt in einen Kreis mit einem maximalen Radius von 0,3 cm einschreibbar ist.

7. Aufgussanordnung (1) nach Anspruch 1, **dadurch gekennzeichnet, dass** der Außenhebel (30) aus einem metallischen Werkstoff hergestellt ist.

8. Aufgussanordnung (1) nach Anspruch 1, **dadurch gekennzeichnet, dass** die Durchgangsleitung (5) zumindest zwei seitliche Aussparungen aufweist, die derart angeordnet sind, dass sie dem aufgegossenen Getränk erlauben, aus der besagten Leitung (5) in den Trichter zu fließen, wenn sich das Verschlussorgan in der zurückgestellten Position befindet.

## Revendications

1. Ensemble d'infusion (1), par exemple pour machines à café du genre fonctionnant avec des dosettes ou des capsules contenant des arômes, comprenant:
- une chambre d'infusion (2) délimitée par un premier élément d'infusion en forme de coupe (3) pourvu d'une cavité (4) pour recevoir à l'intérieur une capsule ou une dosette d'infusion et un second élément d'infusion qui coopère avec le premier élément d'infusion de manière à définir, en couplage avec celui-ci, ladite chambre d'infusion (2);
- un élément de soupape (7) associé à ladite chambre d'infusion pour contrôler la distribution de la boisson infusée;
- ledit élément de soupape (7) comprenant:
- au moins un conduit de passage (5) pour le passage de la boisson infusée depuis la chambre d'infusion (2), comprenant une première portion (5') en communication fluidique avec ladite chambre d'infusion (2) et une seconde portion (5") en communication avec une trémie de distribution (8) configurée pour distribuer la boisson infusée dans un récipient externe;
- un obturateur (13) mobile entre au moins:
c) une position fermée vers l'avant, dans laquelle il empêche l'écoulement de la boisson depuis la chambre d'infusion (2), en dessous d'une valeur de pression prédéfinie; et
d) une position ouverte vers l'arrière, dans laquelle il permet le passage de la boisson de la seconde portion (5") vers la trémie de distribution (8), au-dessus de la valeur de pression prédéfinie;
- ledit conduit de passage (5) comprenant au moins une fenêtre latérale (12) disposée pour permettre l'écoulement de la boisson infusée depuis ledit conduit (5) vers ladite trémie, lorsque ledit obturateur (13) se trouve en position arrière;
dans lequel ledit obturateur (13) mobile comprend:
- au moins un élément de fermeture (14) configuré pour obturer les au moins deux fenêtres latérales (12), empêchant donc le passage de la boisson infusée provenant de la chambre d'infusion (2);
- au moins un élément élastique (15) adapté pour exercer une force élastique sur ledit élément de fermeture (14);
- au moins un élément de support (16) soutenant ledit élément élastique (15) à l'intérieur dudit canal de passage (5), ledit élément de support (16) étant engagé dans un siège de logement,
- ledit élément de support (16) étant configuré pour comprimer ou étendre ledit au moins un élément élastique;
- ledit élément de support (16) étant contrôlé par un levier externe pour son actionnement depuis l'extérieur;
- ledit levier externe (30) étant fonctionnellement relié à une extrémité audit élément de support (16) de manière que la rotation dudit levier externe (30) autour de son axe d'extension entraîne la rotation de l'élément de support (16) par rapport à son siège de logement.

2. Ensemble d'infusion (1) selon la revendication 1, **caractérisé en ce que** ledit siège de logement et ledit élément de support (16) comprennent un filetage.

3. Ensemble d'infusion (1) selon la revendication 1, **caractérisé en ce que** ledit levier externe (30) comprend un corps flexible (31) s'étendant le long d'un axe principal d'extension.

4. Ensemble d'infusion (1) selon la revendication 1, **caractérisé en ce que** ledit levier externe (30) est relié de manière amovible audit élément de support (16), lorsque ledit levier externe (30) contrôle l'élément de support (16).

5. Ensemble d'infusion (1) selon la revendication 1, **caractérisé en ce que** ledit levier externe (30) comprend une extension minimale égale à au moins 2 cm le long de son axe d'extension principal.

6. Ensemble d'infusion (1) selon la revendication 1, **caractérisé en ce que**, en section, ledit levier externe (30) peut être inscrit dans une circonférence de rayon maximal égal à 0,3 cm.

7. Ensemble d'infusion (1) selon la revendication 1, **caractérisé en ce que** ledit levier externe (30) est réalisé en matériau métallique.

8. Ensemble d'infusion (1) selon la revendication 1, **caractérisé en ce que** ledit conduit de passage (5) comprend au moins deux fenêtres latérales disposées pour permettre à la boisson infusée de s'écouler depuis ledit conduit (5) vers ladite trémie, lorsque ledit obturateur se trouve en position arrière.
